# EUROPEAN PATENT APPLICATION

(11) **EP 1 754 918 A2**
(43) Date of publication of application: **21.02.2007**
(21) Application number: 06253967.1
(22) Date of filing: 28.07.2006
(51) Int. Cl.: F16L 3/22, B29C 65/02, B29C 65/06, B29C 65/16, B29C 65/14, B29L 23/00, B29K 77/00, B29K 305/00, B29K 305/02

(54) **Tether attachment to plastic coated metal tubing**

(30) Priority: 19.08.2005 US 208155
(71) Applicant: DANA CORPORATION, Toledo, OH 43615 (US)
(72) Inventor: Stieler, David C., Oakland Michigan 48362 (US); Sleep, Dale L., Hamilton Indiana 46038 (US)
(74) Representative: Cheyne, John Robert Alexander M.

(57) **Abstract**

A package (10) of tubes (12,14) and method for packaging a plurality of tubes (12,14) for use in a manufacturing work cell is provided that enables automation of the tubing assembly process, reduces the manual handling of the tubing to reduce possible contamination, and enables the packaging of tubes in a variety of orientations and improved shipping. Each of the tubes (12,14) may be formed as a laminate having an inner metallic layer (18) and an outer polymeric layer (20). A tether (16) is then bonded to the outer polymeric layers (20) of the tubes (12,14) by generating heat to deform the outer polymeric layers (20) and form a bond between the tubes (12,14) and the tether (16).

## Description

### BACKGROUND OF THE INVENTION

### 1. Field of the Invention

This invention relates to a package of tubes for use in a manufacturing work cell and a manufacturing method thereof and, in particular, to a package of plastic coated metal tubes and a manufacturing method thereof.

### 2. Discussion of Related Art

Motor vehicles may include various fluid handling systems, such as, but not limited to, fuel systems, power steering systems, heating and cooling systems, and hydraulic braking systems. These fluid handling systems commonly include a plurality of tubular bodies made from metals or plastics that are joined together in a manufacturing work cell to provide a fluid passageway. Conventionally, individual pieces of tubing are manually handled in the assembly process of these fluid handling systems. Manual handling of the tubing increases the possibility of contamination of the tubing and is relatively inefficient.

The inventors herein have recognized a need for a package of tubes and a method of packaging a plurality of tubes for use in a manufacturing work cell that will minimize and/or eliminate one or more of the above-identified deficiencies.

### SUMMARY OF THE INVENTION

The present invention relates to a package of tubes for use in a manufacturing work cell..

A package of tubes in accordance with the present invention includes first and second tubes. Each of the tubes is formed as a laminate having an inner metallic layer and an outer polymeric layer. The package of tubes further includes a tether bonded to the outer polymeric layers of the first and second tubes.

The present invention also relates to a method for packaging a plurality of tubes for use in a manufacturing work cell.

A method in accordance with the present invention includes the step of providing first and second tubes. Each of the tubes is formed as a laminate having an inner metallic layer and an outer polymeric layer. The method further includes the step of bonding a tether to the outer polymeric layers of the first and second tubes.

A package of tubes and manufacturing method thereof in accordance with the present invention has significant advantages. The packaging of plastic coated metal tubing with a tether bond between the first and second tubes enables automation of the assembly process. Automation of the assembly process reduces, and may even eliminate, the manual handling of tubing in the assembly process. By eliminating excessive handling of tubing for vehicle fluid handling systems, the possibility of contamination of the tubing may be reduced. In addition, the invention enables the packaging of tubes in a variety of orientations for use in various manufacturing work cells.

These and other advantages of this invention will become apparent to one skilled in the art from the following detailed description and the accompanying drawings illustrating features of this invention by way of example.

### BRIEF DESCRIPTION OF THE DRAWINGS

Figure 1 is a top view of a package of tubes in accordance with the present invention.

Figure 2 is a cross-sectional view of the package of tubes of Figure 1 taken along lines 2-2.

Figure 3 is a flow chart illustrating a method for packaging a plurality of tubes in accordance with the present invention.

### DETAILED DESCRIPTION OF EMBODIMENTS OF THE INVENTION

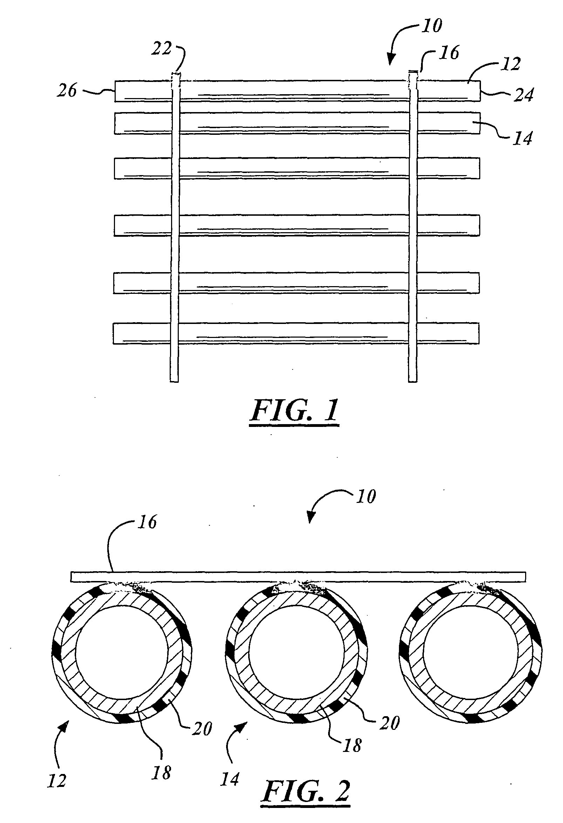

Referring now to the drawings wherein like reference numerals are used to identify identical components in the various views, Figures 1-2 illustrate a package 10 of tubes in accordance with the present invention. The package of tubes may be used in the assembly of a fluid handling system of a motor vehicle, but it should be understood that the inventive package of tubes and method described herein could be used in the assembly of a variety of fluid handling systems for vehicular and non-vehicular applications. Package 10 of tubes may include a plurality of tubes, including tubes 12, 14, and a tether 16.

Tubes 12, 14 are provided for the transport of fluid in a fluid handling system of a motor vehicle. Referring now to Figure 2, tubes 12, 14 are formed as a laminate having a inner metallic layer 18 and an outer polymeric layer 20. The terms "inner" and "outer" as used herein are intended to refer to the juxtaposition of layer 18 relative to layer 20. It should be understood that additional laminate layers may be formed inwardly of inner layer 18 or between inner and outer layers 18, 20 and that either of layers 18, 20 may include a plurality of sublayers without departing from the spirit of the present invention. Further, the polymeric layer 20 may extend over the longitudinal end faces of the metallic layer 18.

Inner layer 18 is metallic. Layer 18 may comprise steel. In a preferred embodiment layer 18 comprises aluminum. Outer layer 20 is polymeric and may comprise a plastic and, in particular, a thermoplastic. Outer layer 20 may or may not include a metallic or carbon or other non-metallic filler. In a preferred embodiment, outer layer 20 comprises nylon. Nylon refers to a family of polyamides generally characterized by the presence of the amide group, --CONH. In a preferred embodiment, the nylon is of a type known as nylon 12. It should be understood, however, that the type of nylon may vary and may be conductive (e.g., through the addition of carbon black) or non-conductive. Outer layer 20 may be prebonded to the inner layer 18 and may be extruded over the inner layer 18. In one constructed embodiment, the component is formed from nylon coated aluminum tubing sold under the registered trademark "HYCOT" by Hydro Aluminum Hycot USA, Inc. The aluminum inner layer of the tubing has a thickness of about 0.1 to about 1.2 mm. The nylon outer layer of the tubing has a thickness of between about 80 and about 500 microns and may measure about 150 microns.

Tubes 12 and 14 may be arranged parallel to each other and may, for example, be spaced approximately one inch apart. While the orientation of tubes 12 and 14 in Figure 1 is illustrated and described as a parallel orientation, it should be understood by those of ordinary skill in the art that, in accordance with one advantage of the present invention, tubes 12, 14 may be oriented in a variety of ways relative to one another without departing from the spirit and scope of the invention. Further, while tubes 12, 14 are described as being spaced by approximately one inch, it should be understood by those of ordinary skill in the art that spacing between tubes 12, 14 may vary. Further, tubes 12, 14 could alternatively be bonded together (as opposed to being spaced apart) before bonding to tether 16 as described in commonly assigned and copending patent applications 11/042,013 and 11/042,014. As illustrated in Figure 1, additional tubes may be arranged in parallel in package 10. While Figure 1 illustrates six tubes in parallel arrangement, it should be understood by those of ordinary skill in the art that fewer or more tubes may be arranged to form a package and remain within the spirit and scope of the invention. In an exemplary embodiment, about 1000 tubes may be arranged into a single package 10.

Tether 16 is provided to couple tubes 12, 14 together to form package 10, so that package 10 can be used in connection with an automatic assembly process in a manufacturing work cell. Tether 16 is polymeric and may comprise a plastic and, in particular, a thermoplastic. In an exemplary embodiment, tether 16 comprises nylon, such as a type of nylon known as nylon 12. It should be understood, however, that the type of nylon may vary.
Tether 16 may be perpendicular to tubes 12, 14. As illustrated in Figure 1, a package 10 of tubes in accordance with the present invention may include a plurality of tethers, such as tethers 16, 22. One tether 16 may be located toward one longitudinal end 24 of tubes 12, 14. Another tether 22 may be located toward another longitudinal end 26 of tubes 12, 14. Although two tethers 16, 22 are shown in the illustrated embodiment, it is understood by those of ordinary skill in the art that the number of tethers and the orientation of the tethers may vary. Tethers 16, 22 may be bonded to outer layers 20 of tubes 12, 14 as described in greater detail hereinbelow.

Package 10 may comprise a coil of tubes 12, 14 bonded by one or more tethers 16 that may be placed on a feeder spool rod or layered for a manufacturing work cell. In operation, one tube of the package 10 may be pulled from the spool rod or the layered tubes and loaded into a feeder for the manufacturing work cell. The feeder transfers the tube through the manufacturing work cell and to the desired location in the tube's proper orientation. The tube is removed from tether 16 and may continue through the assembly process. Tether 16 may remain in a single strand and may be disposed or recycled.

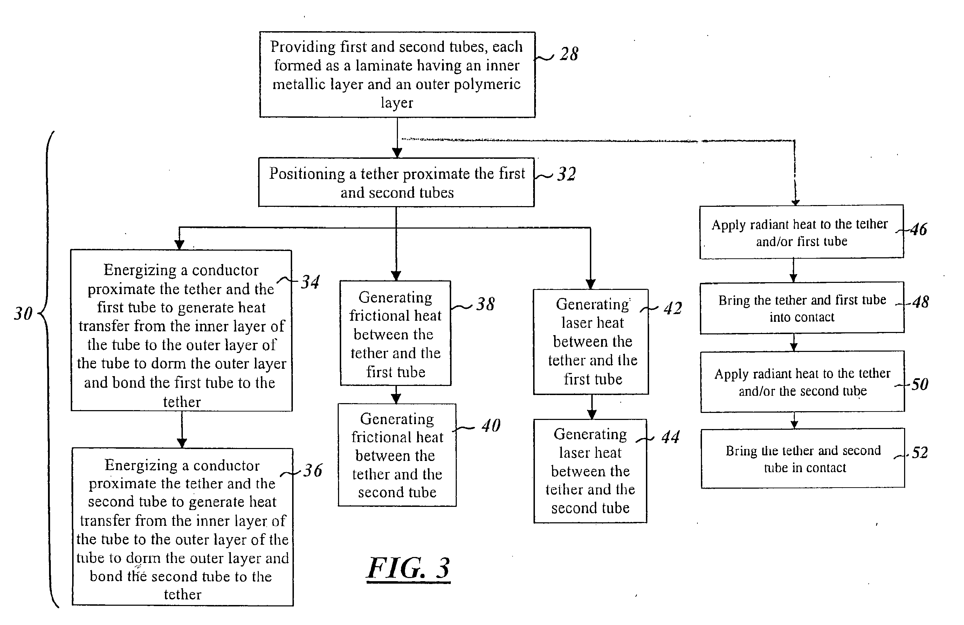

Referring now to Figure 3, a method for packaging a plurality of tubes for use in a manufacturing work cell is described and illustrated. The method begins with the step 28 of providing a plurality of tubes 12, 14. As discussed hereinabove, tubes 12, 14 are formed as a laminate having an inner metallic layer 18 and an outer polymeric layer 20. The inventive method continues with the step 30 of bonding one or more tethers 16 to the outer polymeric layers 20 of the tubes 12, 14.

The step 30 of bonding tethers 16 to tubes 12, 14 may include the substep 32 of positioning tether 16 proximate tubes 12, 14. In accordance with one embodiment of the invention, step 30 may include the additional substep 34 of energizing a conductor proximate tether 16 and tube 12 to generate heat within inner layer 18 of tube 12 and heat transfer from inner layer 18 to outer layer 20 of tube 12 to deform outer layer 20 and bond tube 12 to tether 16. Step 30 may further include the substep 36 of energizing either the conductor used to bond tube 12 and tether 16 or another conductor proximate tether 16 and tube 14 to generate heat within layer 18 of tube 14 and heat transfer from inner layer 18 of tube 14 to outer layer 20 to deform outer layer 20 and bond tube 14 to tether 16. In this manner, tether 16 is bonded to tubes 12, 14 using a form of induction heat welding. Although Figure 3 illustrates sequential performance of substeps 34, 36, it should be understood that steps 34, 36 could be performed simultaneously.

In accordance with another embodiment of the invention, bonding step 30 may include the substep 38 of generating frictional heat between tether 16 and tube 12. At least one of tube 12 and tether 16 may be moved relative to the other in a form of vibrational welding or ultrasonic welding to generate sufficient heat to deform outer layer 20 of tube 12 and form a bond between tube 12 and tether 16. Step 30 may further include the substep 40 of generating frictional heat between tether 16 and tube 14. Again, although Figure 3 illustrates sequential performance of steps 38, 40, it should be understood that steps 38, 40 could be performed simultaneously.

In accordance with another embodiment of the invention, bonding step 30 may include the substep 42 of generating laser heat between tether 16 and tube 12 by directing a laser at the interface of tube 12 and tether 16 to generate sufficient heat to deform outer layer 20 of tube 12 and form a bond between tube 12 and tether 16. Step 30 may further include the substep 44 of generating laser heat between tether 16 and tube 14. Again, although Figure 3 illustrates sequential performance of steps 42, 44, it should be understood that steps 42, 44 could be performed simultaneously.

In accordance with another embodiment of the invention, bonding step 30 may include the substep 46 of applying radiant heat from a heat source to one or both of tether 16 and tube 12 to generate sufficient heat to deform tether 16 and/or outer layer 20 of tube 12 and the substep 48 of bringing tether 16 and tube 12 into contact to form a bond between tube 12 and tether 16. Step 30 may further include the substeps 50, 52 of applying radian heat to tether 16 and/or tube 14 and brining tether 16 and tube 14 into contact to form a bond between tube 14 and tether 16. Although Figure 3 illustrates sequential performance of steps 46, 48, 50, 52, it should be understood that steps 46, 50 could be performed simultaneously and, similarly, that steps 58, 52 could be performed simultaneously.

A package of tubes and method for packaging a plurality of tubes in accordance with the present invention has significant advantages. The packaging of plastic coated metal tubing with a tether bond between the first and second tubes enables automation of the assembly process. Automation of the assembly process reduces, and may even eliminate, the manual handling of tubing in the assembly process. By eliminating excessive handling of tubing, the possibility of contamination of the tubing may be reduced. Further, the invention enables the packaging of tubes in a variety of orientations for use in various manufacturing work cells for assembly.

While the invention has been shown and described with reference to one or more particular embodiments thereof, it will be understood by those of skill in the art that various changes and modifications can be made without departing from the spirit and scope of the invention.

## Claims

1. A package of tubes for use in a manufacturing work cell, comprising:
first and second tubes, each of said tubes formed as a laminate having an inner metallic layer and an outer polymeric layer; and,
a tether bonded to said outer polymeric layers of said first and second tubes.

2. A package of tubes in accordance with claim 1 wherein said inner metallic layer of said first tube comprises aluminum.

3. A package of tubes in accordance with claim 1 wherein said outer polymeric layer of said first tube comprises a plastic.

4. A package of tubes in accordance with claim 1 wherein said outer polymeric layer of said first tube comprises nylon.

5. A package of tubes in accordance with claim 1 wherein said tether comprises a polymer.

6. A package of tubes in accordance with claim 1 wherein said tether comprises a plastic.

7. A package of tubes in accordance with claim 1 wherein said tether comprises nylon.

8. A method for packaging a plurality of tubes for use in a manufacturing work cell, the method comprising the steps of:
providing first and second tubes, each of said tubes formed as a laminate having an inner metallic layer and an outer polymeric layer; and,
bonding a tether to said outer polymeric layers of said first and second tubes.

9. A method in accordance with claim 8 wherein said inner metallic layer of said first tube comprises aluminum.

10. A method in accordance with claim 8 wherein said outer polymeric layer of said first tube comprises a plastic.

11. A method in accordance with claim 8 wherein said outer polymeric layer of said first tube comprises nylon.

12. A method in accordance with claim 8 wherein said tether comprises a polymer.

13. A method in accordance with claim 8 wherein said tether comprises a plastic.

14. A method in accordance with claim 8 wherein said tether comprises nylon.

15. A method in accordance with claim 8 wherein said bonding step further comprises the substeps of:
positioning said tether proximate said first and second tubes;
energizing a first conductor proximate said tether and said first tube to generate heat transfer from said inner layer of said first tube to said outer layer of said first tube to deform said outer layer of said first tube and bond said first tube to said tether; and
energizing one of said first conductor and a second conductor proximate said tether and said second tube to generate heat transfer from said inner layer of said second tube to said outer layer of said second tube to deform said outer layer of said second tube and bond said second tube to said tether.

16. The method of claim 15 wherein said step of emerging a first conductor proximate said tether and said first tube and said step of energizing one of said first conductor and a second conductor proximate said tether and said second tube occur substantially simultaneously.

17. A method in accordance with claim 8 wherein said bonding step further comprises the substeps of:
positioning said tether proximate said first and second tubes;
generating frictional heat between said tether and said first tube; and
generating frictional heat between said tether and said second tube.

18. A method in accordance with claim 8 wherein said bonding step further comprises the substeps of:
positioning said tether proximate said first and second tubes;
generating laser heat between said tether and said first tube; and
generating laser heat between said tether and said second tube.

19. A method in accordance with claim 8 wherein said bonding step further comprises the substeps of:
applying radiant heat to at least one of said tether and said first tube;
bringing said tether and said first tube into contact;
applying radian heat to at least one of said tether and said second tube; and,
brining said tether and said second tube into contact.
